# EUROPÄISCHE PATENTSCHRIFT

(11) **EP 3 964 392 B1**
(45) Veröffentlichungstag und Bekanntmachung des Hinweises auf die Patenterteilung: **02.10.2024**
(21) Anmeldenummer: 21193670.3
(22) Anmeldetag: 27.08.2021
(51) Int. Cl.: B60P 3/36, B62D 63/06

(54) **WOHNMOBIL**
MOBILE HOME
CAMPING-CAR

(30) Priorität: 27.08.2020 DE 102020122492
(43) Veröffentlichungstag der Anmeldung: 09.03.2022
(73) Patentinhaber: Niesmann+Bischoff GmbH, 56751 Polch (DE)
(72) Erfinder: WEIBER, Andreas, 56220 Bassenheim (DE); WAGNER, Georg, 56288 Korweiler (DE); KASTEN, Ole, 21680 Stade (DE); WULF, Mathis, 21680 Stade (DE)
(74) Vertreter: Müller Schupfner & Partner Patent- und Rechtsanwaltspartnerschaft mbB (Muc)

(56) Entgegenhaltungen:
- EP-A1- 2 738 068
- EP-A1- 3 578 439
- EP-B1- 2 934 944
- DE-A1- 102014 108 595
- DE-A1- 102018 113 734

## Beschreibung

Die Erfindung betrifft ein Wohnmobil mit einer Garagenwanne im Heckbereich.

Wohnmobile besitzen sehr häufig im Heckbereich einen Stauraum, der üblicherweise als Garage bezeichnet wird und oftmals so groß ausgeführt ist, dass auch sperrige Gegenstände wie zum Beispiel Fahrräder in diesem verstaut werden können.

Diese Heckgarage wird gebildet, indem an dem Fahrzeugrahmen des dem Wohnmobil zugrunde liegenden Transporterfahrzeugs am Heck eine Verlängerung in Form einer Wanne bzw. Garagenwanne angesetzt wird, über der sich direkt der Stauraum und darüber der Wohnbereich des Wohnmobils befindet, insbesondere oftmals ein Bett. Auch bei speziell für das Wohnmobil gebildeten Rahmen wird an diesen die Garagenwanne angesetzt.

Diese Garagenwannen werden nach dem Stand der Technik hauptsächlich in zwei unterschiedlichen Bauweisen hergestellt.

Bei der einen wird eine Unterkonstruktion aus Stahlprofilen gebildet, die fest mit dem Chassisrahmen bzw. Fahrzeugrahmen verschraubt ist. Diese Unterkonstruktion trägt eine Wanne bzw. den Boden der Garage bestehend aus einem Brett oder einem Sandwichmaterial. Häufig kommen dabei Decklagen aus GFK oder Aluminium mit Kernen aus Schaum, z.B. XPS, zum Einsatz. Die Sandwichplatten können beispielsweise durch Verkleben und Verpressen von dünnen Aluminiumblechen mit einer Platte aus leichtem XPS-Schaum gefertigt werden. Die so entstandene Sandwichplatte kann durch V-förmige Einfräsungen und Knicken an den entsprechenden Stellen leicht als Wanne ausgeführt werden.

Nachteilig an diesem Stand der Technik ist, dass zwar die Sandwichplatten durch einfaches Verkleben und Verpressen von dünnen Aluminiumblechen und XPS-Schaum Platten sehr leicht ausgeführt werden können, aber sich durch die Unterkonstruktion aus Stahlprofilen ein hohes zusätzliches Gewicht ergibt, typischerweise mehr als 20 kg. Auch entstehen zusätzliche Kosten und ein erhöhter Montageaufwand durch die Unterkonstruktion aus Stahlprofilen.

Ein weiteres bekanntes Verfahren zur Herstellung einer solchen Garagenwannen führt zu einer werkzeugfallenden Wanne, folglich einer leicht und schnell herzustellenden, da nicht in mehrteiligen Schritten zu produzierenden Garagenwanne. Diese wird aus einem Sandwich aus GFK Deckschichten und einem Schaumkern gebildet. Eine Abstützung durch zusätzliche Stahlprofile ist nicht notwendig. Das Teil entsteht in einer Form in der Glasfasermatten und Schaumkern eingelegt werden. Kunstharz wird nachfolgend mittels Vakuums in die Form gezogen.

Nachteilig an diesem Stand der Technik ist jedoch, dass eine gewisse Mindestdicke der Decklagen nicht unterschritten werden darf, damit Kunstharz das GFK-Vlies vollständig durchtränken kann. Zudem erhöhen sich bei Verringerung der Decklagendicke die Fertigungszeit und damit die Fertigungskosten, da das Harz das Material langsamer durchtränkt. Daher sind Materialstärken des GFK im Bereich von 3 mm üblich. Durch diese fertigungsbedingt relativ großen Wandstärken der Decklagen ergeben sich aber zwangsläufig hohe Flächengewichte, z.B.: 0,003m × 1m² × 1500 kg/m³ = 4,5kg/m², hohe Werkzeugkosten sowie hohe Fertigungskosten.

Aus EP 2 738 068 A1 und EP2 934 944 B1 sind Garagenwannen nach dem Oberbegriff des Patentanspruchs 1 bekannt.

Der vorliegenden Erfindung liegt die Aufgabe zugrunde, Wohnmobil mit einer Garagenwannen zur Verfügung zu stellen, die die die zuvor genannten Nachteile vermeidet und leicht, zugleich hochfest sowie kostengünstig zu produzieren ist.

Diese Aufgabe wird durch ein Wohnmobil mit einer Garagenwannen den Merkmalen des unabhängigen Patentanspruchs 1 gelöst. Vorteilhafte Weiterbildungen der Erfindung sind in den Unteransprüchen angegeben.

Vorteilhaft sind bei einem Wohnmobil mit einer im Heckbereich im Anschluss an einen Fahrzeugrahmen angeordneten Bodenwanne als Garagenwanne aus Verbundwerkstoffplatten, wobei die Verbundwerkstoffplatten aus mindestens einem, bevorzugt zwei Deckblechen, insbesondere Aluminiumblech, und einem Schaumkern, insbesondere XPS-Schaum, besteht, die an den Knickstellen V-förmig eingeschnitten und gebogen sind, am Übergang zwischen einer Seitenwand des Wohnmobils und der Garagenwanne Verbindungsbleche vorgesehen zur Ableitung der Kräfte. Dabei sind an besonders belasteten Stellen Hartschaumplatten aus PU-Schaum in die Verbundwerkstoffplatte eingelegt und verpresst.

Durch dieses neue System ergibt sich eine freitragende Aluminium-Sandwichwanne, bzw. aus Verbundwerkstoffplatten bestehende Wanne, die keine zusätzliche Unterkonstruktion aus einem Stahlgerüst oder Rahmen benötigt. Dabei kann die Sandwichwanne aus sehr dünnen Aluminiumblechen, beispielsweise mit einer Dicke von 0,5 mm, und einem Kern aus XPS-Schaum gefertigt werden. Nach dem Verkleben der Deckbleche und Verpressen mit dem Kern werden an den Knickstellen der Wanne V-förmige Aussparungen eingefräst, an denen die Sandwichplatte gebogen werden kann. Es ist auch denkbar, jede andere geeignete Profilform für die Einfräsung einzusetzen. Am hoch belasteten Übergang zwischen Seitenwand und Garagenwanne verbinden kleine Bleche, die verschraubt und verklebt werden, die Deckbleche und leiten so die Kräfte ab. Durch diese feste Verbindung mit den Seitenwänden trägt der darüber angeordnete Aufbau mit und kann die Sandwichwanne insgesamt frei tragen. Diese Eigenschaft kann auch unabhängig von der Verbindung mit den Seitenwänden durch jede einzelne der nachfolgend geschilderten Maßnahmen erreicht werden. Durch das Einlegen und Verpressen von Hartschaumplatten aus PU-Schaum in die Verbundwerkstoffplatte an besonders belasteten Stellen kann eine gezielte Verstärkung entsprechend den Kraftlinien und Spannungsspitzen in der Sandwichwanne erreicht werden. Auch dadurch werden zumindest ein Teil, wenn nicht alle Kräfte aufgenommen, die sonst durch eine Rahmenkonstruktion aufgenommen werden müssten.

Daneben sind die V-förmig eingeschnitten und gebogenen Knicksteller verklebt, insbesondere durch hochfeste Kleber.

Dadurch werden die Kräfte in den höher belasteten Bereichen der Knickstellen sicher übertragen und die Gegenstelle kann sich nicht öffnen.

Vorteilhaft sind die Verbindungsbleche verklebt und/oder verschraubt.

Die Zugangstüren bzw. Zugangsklappen zu einem Stauraum oberhalb der Garagenwannen können sich von der Garagenwannen bis in eine Seitenwand erstrecken und ein Rahmen der Zugangstüren bzw. Zugangsklappen kann fest sowohl mit der Seitenwand als auch mit der Garagenwanne verbunden sein, insbesondere verklebt sein.

Damit wirken die Rahmen der Zugangstüren bzw. Zugangsklappen als tragende Elemente zwischen der Garagenwanne und der Seitenwand.

Vorteilhaft sind zwischen einem auf dem Fahrzeugrahmen angeordneten Laufboden und einer vorderen Wand der Garagenwanne L-Profile auf Vorder- und/oder Rückseite mit den Deckblechen verschraubt und/oder verklebt, um die Lasten aufzunehmen.

Im Übergang zwischen Laufboden und vorderer Wand der Garagenwanne wird somit eine Kraftüberleitung und feste Verbindung sichergestellt.

Die zuvor geschilderten Maßnahmen können noch jeweils einzelnen allein vorgenommen werden wie einzig und allein Nutzung eines hochfesten Klebers in den V-Einschnitten, alleiniger Einsatz der Rahmen der Zugangsklappen bzw. Zugangstüren als verbindende Rahmen und Einsatz der L-Profile jeweils unabhängig von den anderen geschilderten Maßnahmen.

Vorteilhaft ergibt sich eine wesentliche Gewichtseinsparung durch sehr dünne Deckschichten, z.B. ergeben 0,5 mm Alu nur ein Flächengewicht von 1,35 kg/m², und den Entfall der Unterkonstruktion aus Stahl. Auch entstehen sehr geringe Fertigungskosten, da Teile einfach gekantet werden können, die Unterkonstruktion aus Stahl entfällt, und keine Werkzeugkosten entstehen.

Es ist denkbar, die Garagenwanne lokal noch so zu verstärken, dass auch bei Montage einer Anhängerkupplung keine zusätzliche Unterkonstruktion aus Stahl mehr erforderlich ist.

Weitere Vorteile und Einzelheiten der Erfindung werden anhand der in den schematischen Figuren dargestellten Ausführungsbeispiele näher erläutert. Hierbei zeigt
- Fig. 1: eine erfindungsgemäße Garagenwanne in Perspektivansicht von unten, außen,
- Fig. 2: die Garagenwanne allein an den Fahrzeugrahmen angesetzt,
- Fig. 3: in Aufsicht eine vordere Seite der Garagenwanne,
- Fig. 4: den Schnitt B aus der Fig. 3 und
- Fig. 5: die Garagenwanne allein ohne Fahrzeugrahmen.,

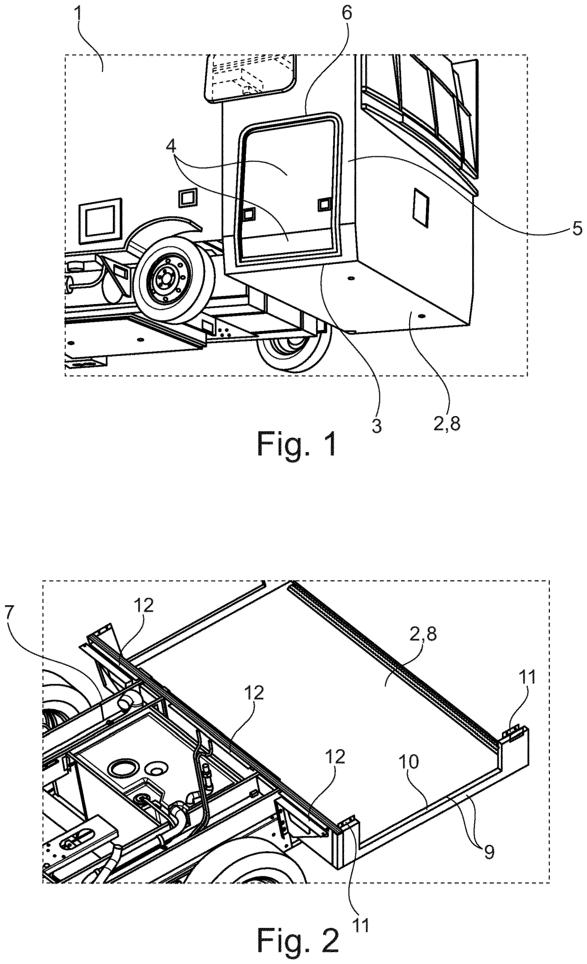

Die Fig. 1 zeigt ein Wohnmobil 1 mit einer erfindungsgemäßen Garagenwanne 2 in Perspektivansicht von unten, außen. Die Garagenwanne 2 besteht aus einer Verbundwerkstoffplatte 8 aus zwei Aluminiumdeckschichten mit einem dazwischen verklebten und verpressten Schaumkern. An einer Kante als Knickstelle 3 ist die Verbundwerkstoffplatte 8 V-förmige eingefräst und mit dem äußeren Blech gebogen sowie mit einem hochfesten Kleber zusätzlich in der Einfräsung verklebt.

Eine Zugangstüre 4 erstreckt sich sowohl in die Garagenwanne 2 wie auch in eine Seitenwand 5 des Wohnmobils 1. Ein Rahmen 6 der Zugangstüren 4 ist sowohl in der Seitenwand 5 wie auch in der Garagenwanne 2 verklebt und leitet somit vertikale Kräfte ab.

Die Fig. 2 zeigt die Garagenwanne 2 allein an einem Fahrzeugrahmen 7 angesetzt. Die Verbundwerkstoffplatte 8 weist die zwei Aluminiumdeckschichten 9 und den Schaumkern 10 auf. Verbindungsbleche 11 dienen dazu, die Garagenwanne 2 mit der Seitenwand 5 zu verbinden und ebenfalls vertikale Kräfte zu übertragen. An einer Vorderseite der Garagenwanne 2 sind L-Profile 12 angeordnet, mit denen eine Verbindung zu einem hier nicht dargestellten Laufboden erreicht wird.

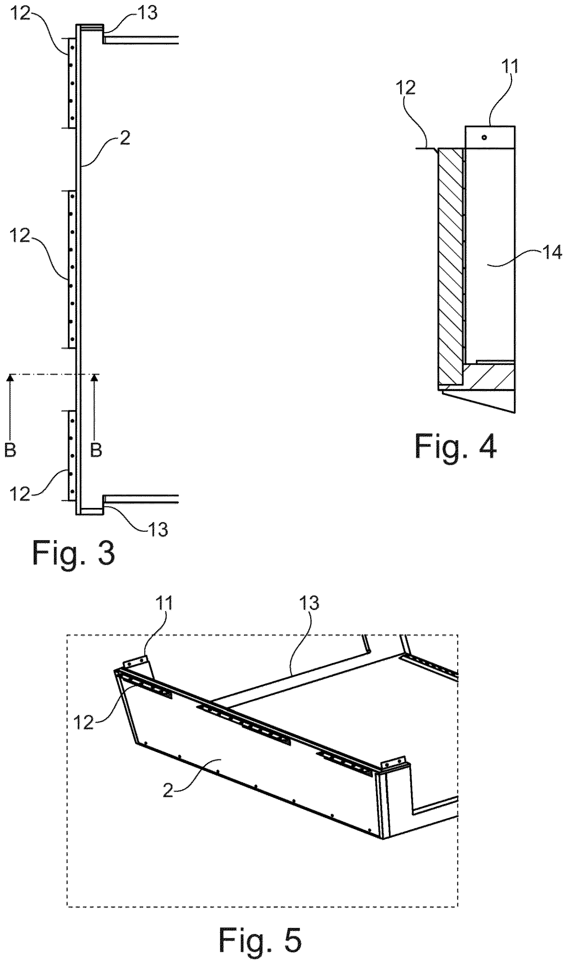

Die Fig. 3 zeigt in Aufsicht eine vordere Seite der Garagenwanne 2 mit den L-Profilen 12 und dem Anfang von Ausschnitten 13 für die Zugangstüren 4.

Die Fig. 4 zeigt den Schnitt B aus der Fig. 3. An der Oberkante der Vorderseite sind die L-Profile 12 angeordnet und auf einer hochgebogenen Seitenwand 14 der Garagenwanne 2 die Verbindungsbleche 11.

Die Fig. 5 zeigt die Garagenwanne allein ohne Fahrzeugrahmen 7. mit den L-Profilen 12, den Verbindungsblechen 11 und den Ausschnitten 13 für die Zugangstüren 4.

## Patentansprüche

1. Wohnmobil mit einer im Heckbereich im Anschluss an einen Fahrzeugrahmen (7) angeordneten Bodenwanne als Garagenwanne (2) aus Verbundwerkstoffplatten (8), wobei die Verbundwerkstoffplatten (8) aus mindestens einem, bevorzugt zwei Deckblechen, insbesondere Aluminiumblech (9), und einem Schaumkern (10), insbesondere XPS-Schaum, besteht, die an den Knickstellen (3) eingefräst, insbesondere V-förmig eingeschnitten, und gebogen sind,
**dadurch gekennzeichnet,**
**dass** am Übergang zwischen einer Seitenwand (5) des Wohnmobils (1) und der Garagenwanne (2) Verbindungsbleche (11) vorgesehen sind zur Ableitung der Kräfte und dass an besonders belasteten Stellen Hartschaumplatten aus PU-Schaum in die Verbundwerkstoffplatte (8) eingelegt sind und die V-förmig eingeschnitten und gebogenen Knickstellen (3) verklebt sind, insbesondere durch hochfeste Kleber.

2. Wohnmobil nach Anspruch 1,
**dadurch gekennzeichnet,**
**dass** die Verbindungsbleche (11) verklebt und/oder verschraubt sind.

3. Wohnmobil nach einem der vorhergehenden Ansprüche,
**dadurch gekennzeichnet,**
**dass** Zugangstüren (4) bzw. Zugangsklappen zu einem Stauraum oberhalb der Garagenwanne (2) sich von der Garagenwannen (2) bis in eine Seitenwand (5) erstrecken und ein Rahmen (6) der Zugangstüren (4) bzw. Zugangsklappen fest mit sowohl der Seitenwand (5) als auch der Garagenwanne (2) verbunden ist, insbesondere verklebt ist.

4. Wohnmobil nach einem der vorhergehenden Ansprüche,
**dadurch gekennzeichnet,**
**dass** zwischen einem auf dem Fahrzeugrahmen (7) angeordneten Laufboden und einer vorderen Wand der Garagenwanne (2) L-Profile (12) auf Vorder- und/oder Rückseite mit den Deckblechen (9) verschraubt und/oder verklebt sind, um die Lasten aufzunehmen.

## Claims

1. Mobile home having a base tub arranged in the rear section adjacent to a vehicle frame (7), wherein the base tub is a garage tub (2) made of composite material panels (8), wherein the composite material panels (8) consist of at least one, preferably two cover sheets, in particular aluminum sheets (9), and a foam core (10), in particular XPS foam, which are milled at the folds (3), in particular cut in a V-shape, and bent,
**characterized in that**
at the transition between a side wall (5) of the mobile home (1) and the garage tub (2), connecting plates (11) are intended for transferring the forces, and **in that** rigid foam panels made of PU foam are inserted into the composite material panel (8) at particularly loaded points, and **in that** the V-shaped cut and bent folds (3) are glued, in particular by means of high-strength adhesives.

2. Mobile home according to claim 1,
**characterized in that**
the connecting plates (11) are glued and/or screwed together.

3. Mobile home according to one of the preceding claims,
**characterized in that**
access doors (4) or access flaps to a storage space above the garage tub (2) extend from the garage tub (2) into a side wall (5) and a frame (6) of the access doors (4) or access flaps is firmly attached, in particular glued, to both the side wall (5) and the floor pan (2).

4. Mobile home according to one of the preceding claims,
**characterized in that**
between a walking floor arranged on the vehicle frame (7) and a front wall of the garage tub (2), L-profiles (12) are screwed and/or glued to the cover plates (9) on their front and/or rear side in order to carry the loads.

## Revendications

1. Camping-car comprenant, agencé dans la zone arrière et connecté à un châssis de véhicule (7), un bac de plancher en tant que bac de soute (2) en plaques de matériau composite (8), les plaques de matériau composite (8) étant composées d'au moins une, de préférence deux tôles de couverture, en particulier une tôle d'aluminium (9), et d'une âme en mousse (10), en particulier une mousse XPS, qui sont fraisées, en particulier entaillées en forme de V et incurvées, au niveau de points d'inflexion (3),
**caractérisé en ce que**
dans une zone de transition entre une paroi latérale (5) du camping-car (1) et le bac de soute (2), des tôles de liaison (11) sont prévues pour dériver les forces, et **en ce que**, au niveau d'emplacements particulièrement sollicités, des plaques de mousse dure en mousse PU sont insérées dans la plaque de matériau composite (8) et les points d'inflexion (3) incurvés et entaillés en forme de V sont collés, en particulier au moyen de colles haute résistance.

2. Camping-car selon la revendication 1,
**caractérisé en ce que**
les tôles de liaison (11) sont collées et/ou vissées.

3. Camping-car selon l'une des revendications précédentes,
**caractérisé en ce que**
les portes d'accès (4) ou clapets d'accès à un compartiment de rangement au-dessus du bac de soute (2) s'étendent depuis les bacs de soute (2) jusque dans une paroi latérale (5) et un châssis (6) des portes d'accès (4) ou clapets d'accès est lié, en particulier collé, de manière solidaire tant à la paroi latérale (5) qu'au bac de soute (2).

4. Camping-car selon l'une des revendications précédentes,
**caractérisé en ce que**
entre un plancher de marche agencé sur le châssis de véhicule (7) et une paroi avant du bac de soute (2), des profilés en L (12) sont vissés et/ou collés avec les tôles de couverture (9) sur les faces avant et/ou arrière pour absorber les charges.
